# FASCICULE DE BREVET EUROPEEN

(11) **EP 0 928 592 B1**
(45) Date de publication et mention de la délivrance du brevet: **18.07.2001**
(21) Numéro de dépôt: 98403347.2
(22) Date de dépôt: 31.12.1998
(51) Int. Cl.: A47J 37/07, A47J 37/06

(54) **Appareil de cuisson avec une poignée pour une plaque de cuisson**
Kochgerät mit einem Griff für eine Kochplatte
Cooking utensil with a handle for a cooking plate

(30) Priorité: 09.01.1998 FR 9800170
(43) Date de publication de la demande: 14.07.1999
(73) Titulaire: SEB S.A., 69130 Ecully (FR)
(72) Inventeur: Betend-Bon, Alain, 74000 Annecy (FR)
(74) Mandataire: Keib, Gérard

(56) Documents cités:
- DE-U- 9 303 912
- FR-A- 2 422 372

## Description

La présente invention concerne une poignée pour plaque de cuisson d'un appareil de cuisson, tel qu'un barbecue. Un appareil de cuisson selon le préambule de la revendication 1 est connu du document FR-A-2 422 372.

Elle concerne également une plaque de cuisson équipée de telles poignées.

Les appareils de cuisson actuels, du type barbecue ou gril, sont équipés de quatre poignées : deux poignées sont fixées sur la cuve de l'appareil pour porter l'ensemble, et deux poignées sont fixées sur la plaque ou grille de cuisson pour porter cette plaque de cuisson et ôter celle-ci de la cuve, notamment lors du nettoyage de l'appareil de cuisson.

La présente invention a pour but de simplifier les appareils de cuisson traditionnels et propose à cet effet une poignée qui assure plusieurs fonctions.

La poignée visée par l'invention est prévue pour une plaque de cuisson d'un appareil de cuisson comprenant une embase adaptée à supporter la plaque.

Selon l'invention, cette poignée comporte des moyens d'accrochage adaptés à venir en prise avec une portion de l'embase dans une position accrochée et à être désolidarisés de l'embase dans une position libérée.

Ainsi, une poignée unique permet à la fois de porter la plaque de cuisson seule et de porter l'appareil de cuisson comprenant la plaque de cuisson fixée sur l'embase.

Grâce à l'invention, il n'est plus nécessaire de prévoir des poignées supplémentaires sur l'embase de l'appareil de cuisson.

Selon une version préférée, la poignée comprend des organes de support adaptés à supporter la plaque de cuisson sur l'embase.

Outre la fonction de port de la plaque, les poignées permettent de supporter la plaque de cuisson sur l'embase.

Selon une autre version préférée de l'invention, la poignée est mobile par rapport à la plaque de cuisson entre une position dite haute dans laquelle la plaque est adaptée à être maintenue à distance de l'embase, et une position dite basse, dans laquelle la plaque est adaptée à être maintenue rapprochée de l'embase.

La poignée permet de régler ainsi la hauteur de la plaque de cuisson sur l'embase, et de modifier la distance séparant cette plaque de la source de chaleur qui peut être constituée de manière connue d'une résistance électrique chauffante.

Selon un autre aspect de l'invention, une plaque de cuisson pour appareil de cuisson, comprenant une embase formant cuve et adaptée à supporter la plaque, est caractérisée en ce qu'elle comprend deux poignées conformes à l'invention.

D'autres particularités et avantages de l'invention apparaîtront encore dans la description ci-après.

Aux dessins annexés, donnés à titre d'exemples non limitatifs:
- la figure 1 est une vue partielle en perspective d'une plaque de cuisson conforme à l'invention;
- la figure 2 est une vue de dessous de la plaque de la figure 1, avec une poignée dans une position écartée de la grille;
- la figure 3 est une vue de dessous de la plaque de la figure 1, avec une poignée adjacente à la plaque; et
- les figures 4, 5, 6 et 7 illustrent schématiquement le fonctionnement de la poignée conforme à l'invention.

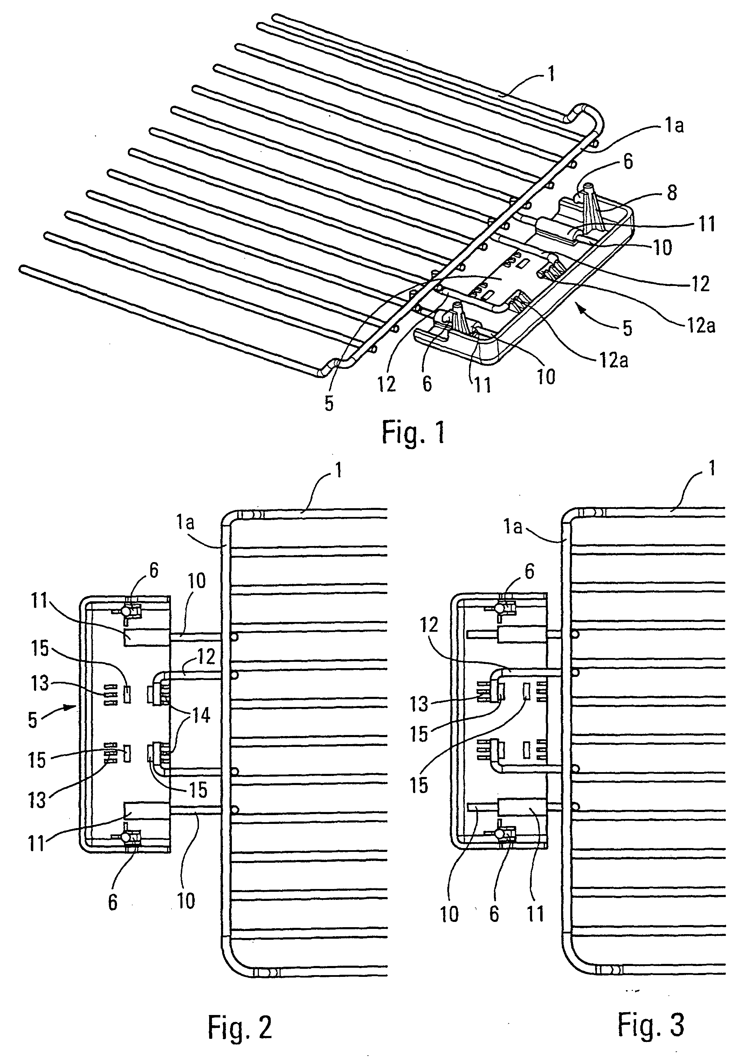

En référence tout d'abord à la figure 1, une grille 1 est prévue pour un appareil de cuisson, tel qu'un gril ou un barbecue.

La grille est dans cet exemple et de manière non limitative une plaque de cuisson qui pourrait également être une plaque pleine ou encore une plaque ajourée.

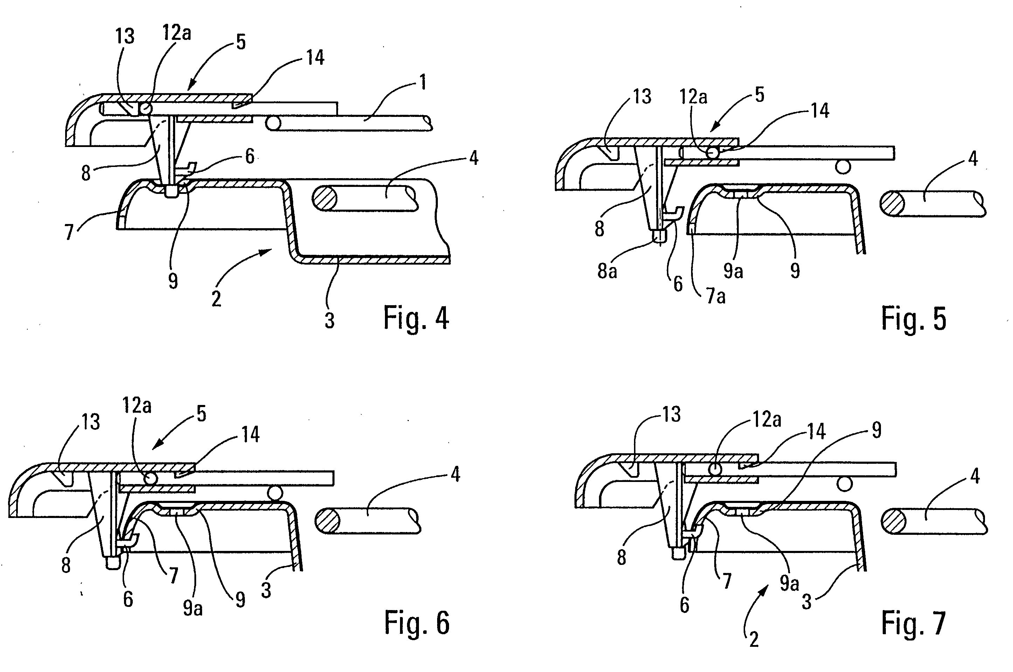

Comme illustré à la figure 4, cet appareil de cuisson comporte une embase 3 formant cuve destinée à récupérer les jus et graisses de cuisson lorsque la plaque de cuisson 1 est ajourée.

Une résistance électrique chauffante 4 est fixée, généralement de manière amovible, sur la cuve pour chauffer et cuire des aliments posés sur la grille 1.

La grille 1 est supportée par l'embase 3, de manière amovible afin de faciliter son nettoyage.

Une poignée 5 est solidaire de la grille 1 pour manipuler celle-ci et en particulier régler sa position par rapport à l'embase 3 et à la résistance chauffante 4.

La poignée 5 comporte des moyens d'accrochage 6 adaptés à venir en prise avec une portion 7 de l'embase 3 dans une position accrochée et à être désolidarisée de l'embase 3 dans une position libérée.

Ces moyens d'accrochage 6 comprennent dans cet exemple des crochets 6 adaptés à venir en prise avec un rebord 7 de l'embase 3.

De préférence, l'embase 3 comporte un bord retourné 7 formant rebord sous lequel viennent se positionner les crochets 6 de la poignée 5.

A titre d'exemple, la poignée 5 peut comporter deux crochets 6 disposés symétriquement par rapport à un axe médian de la grille 1.

Comme illustré à la figure 5, le rebord 7 de l'embase peut comporter des échancrures 7a permettant le passage des crochets 6.

La poignée 5 comporte en outre des organes de support 8 adaptés à supporter la grille 1 sur l'embase 3.

Comme illustré à la figure 4, ces organes de support 8 sont en forme de pieds s'étendant perpendiculairement au plan formé par la poignée 5 et la grille 1, l'extrémité de ces pieds coopérant avec une cavité 9 prévue dans l'embase 3 de l'appareil.

Chaque poignée 5 comportant deux pieds 8 dans cet exemple, l'embase 3 comprend également deux cavités 9, formées dans son rebord 7, afin de faciliter le positionnement de la grille 1 sur l'embase 3.

Pour renforcer les liaisons mécaniques de la grille 1 sur l'embase, chaque pied 8 peut comporter à son extrémité un embout 8a adapté à s'encastrer dans un évidemment 9a formé dans le fond de la cavité 9.

Les crochets 6 sont fixés respectivement sur les pieds 8 de support et sont dirigés vers la grille 1.

La poignée 5 est mobile par rapport à la grille 1 entre une position dite haute, dans laquelle la grille 1 est adaptée à être maintenue à distance de l'embase 3, et une position dite basse, dans laquelle la grille 1 est adaptée à être maintenue rapprochée de l'embase 3.

Dans cet exemple, la poignée 5 coulisse en translation dans le plan de la grille 1 entre ladite position haute et ladite position basse.

La position haute, illustrée à la figure 4, correspond à la garde au chaud d'un aliment, alors que la position basse, illustrée à la figure 6, correspond à l'utilisation de l'appareil pour griller ou cuire des aliments.

Dans la position haute, la poignée 5 est adjacente à la grille 1, de sorte que les pieds de support 8 sont en regard du rebord 7 de l'embase 3 lorsque la grille 1 est posée sur cette dernière.

En revanche, dans la position basse, la poignée 5 est à distance de la grille 1, les pieds de support 8 étant situés au-delà du rebord 7 de l'embase. La grille 1 repose alors sur le rebord 7 de l'embase 3 directement au niveau de la poignée 5 ou de la grille 1.

La poignée 5 peut en outre être mobile par rapport à la grille 1 dans des positions intermédiaires, entre la position dite haute et la position dite basse, dans lesquelles la grille 1 est maintenue à distance variable de l'embase 3.

Des pieds 8 de différentes longueurs peuvent être prévus pour permettre ce réglage en hauteur de la grille 1 sur le rebord 7 de l'embase, ou encore le rebord 7 peut comporter différentes cavités 9 de profondeur variable adaptées à loger les pieds 8.

Comme illustré aux figures 2 et 3, pour le coulissement de la poignée 5, le côté la de la grille 1, sur lequel est fixée la poignée 5, comporte deux tiges 10 adaptées à coulisser dans des fourreaux 11 formant moyens de guidage en translation de la poignée et prévues sous la poignée 5, sur la même face 5a équipée des pieds de support 8.

Cette même face 5a de la poignée 5 comporte également des butées 13, 14, constituées par exemple de saillies, entre lesquelles coulissent des extrémités recourbées 12a de tiges 12 également solidaires du côté la de la grille 1.

Ces butées 13, 14 permettent de limiter le mouvement en translation, dans les deux directions opposées, de la poignée 5 sur les tiges 10.

Entre les saillies 13, 14, d'autres saillies, de plus petites dimensions peuvent être prévues sur la face 5a de la poignée, à proximité de chaque saillie 13, 14 formant butée, afin de retenir en bout de course, l'extrémité 12a de chaque tige 12, entre une saillie de butée 13, 14 et une petite saillie 15.

Les moyens d'accrochage 6 sont adaptés à venir en prise avec une portion 7 de l'embase 3, c'est-à-dire dans cet exemple le rebord 7 de l'embase 3, lorsque la poignée 5 est mobile de la position basse, à distance de la grille 1, vers la position haute.

La position accrochée de la grille 1 sur l'embase 3 correspond ainsi à une position intermédiaire de la poignée 5 mobile en translation entre une position écartée et une position rapprochée de la grille 1.

La grille 1 comporte deux poignées 5 comme décrites précédemment, fixées symétriquement de part et d'autre de la grille 1, sur deux côtés opposés la de la grille.

Ces poignées 5 permettent de régler en hauteur la grille 1 sur l'embase 7 de l'appareil de cuisson.

En outre, lorsque les poignées 5 sont déplacées de la position dite basse, illustrée à la figure 6, vers la position dite haute, les crochets 6 sont introduits dans les échancrures 7a du rebord 7 de l'embase 3.

Lorsque l'utilisateur soulève l'appareil grâce aux poignées 5 de la grille 1, les crochets 6 sont en prise avec le rebord 7 de l'embase. Ce rebord 7 empêche la translation des poignées 5 vers la position dite basse de la grille 1, ce qui permet de porter l'ensemble de l'appareil en toute sécurité.

Bien entendu, de nombreuses modifications peuvent être apportées à cet exemple sans sortir du cadre de l'invention.

Ainsi, les poignées pourraient être mobiles en rotation autour d'un axe parallèle au côté la de la grille pour venir s'accrocher sous le rebord de l'embase 3 en position accrochée.

L'embase de l'appareil peut comporter une partie formant cadre sur laquelle repose la grille, une cuve amovible étant supportée par la partie formant cadre de l'embase.

La grille peut également être une plaque ajourée ou pleine formant plaque de cuisson pour supporter les aliments à cuire.

## Revendications

1. Appareil de cuisson comprenant une plaque de cuisson (1) munie d'une poignée (5) solidaire d'un bord (1a) de ladite plaque de cuisson (1) et une embase (3) adaptée à supporter ladite plaque (1), caractérisé en ce que ladite poignée (5) comporte des moyens d'accrochage (6) adaptés à venir en prise avec une portion (7) de l'embase (3) dans une position accrochée et à être désolidarisés de l'embase (3) dans une position libérée.

2. Appareil conforme à la revendication 1, caractérisé en ce que ladite poignée comprend des organes de support (8) adaptés à supporter ladite plaque de cuisson (1) sur l'embase (3).

3. Appareil conforme à l'une des revendications 1 ou 2, caractérisé en ce que ladite poignée (5) est mobile par rapport à la plaque de cuisson (1) entre une position dite haute, dans laquelle la plaque de cuisson (1) est adaptée à être maintenue à distance de l'embase (3), et une position dite basse, dans laquelle la plaque de cuisson (1) est adaptée à être maintenue rapprochée de l'embase (3).

4. Appareil conforme à la revendication 3, caractérisé en ce que ladite poignée (5) est mobile par rapport à la plaque de cuisson (1) dans des positions intermédiaires, entre la position dite haute et la position dite basse, dans lesquelles la plaque de cuisson (1) est maintenue à une distance variable de l'embase (3).

5. Appareil conforme à l'une des revendications 3 ou 4, caractérisé en ce que la poignée (5) coulisse en translation dans le plan de ladite plaque de cuisson (1) entre ladite position haute et ladite position basse.

6. Appareil conforme à la revendication 5, caractérisé en ce que dans ladite position haute, la poignée (5) est adjacente à la plaque de cuisson (1) et dans ladite position basse, la poignée (5) est à distance de la plaque de cuisson (1).

7. Appareil conforme à l'une des revendications 3 à 6, caractérisé en ce que les moyens d'accrochage (6) sont adaptés à venir en prise avec une portion (7) de l'embase (3) lorsque la poignée (5) est mobile de ladite position basse vers ladite position haute.

8. Appareil conforme à l'une des revendications 1 à 7, caractérisé en ce que les moyens d'accrochage (6) comprennent des crochets (6) adaptés à venir en prise avec un rebord (7) de l'embase (3).

9. Appareil conforme à l'une des revendications 1 à 8, caractérisé en ce que la plaque de cuisson (1) est une grille.

10. Appareil conforme à l'une des revendications 1 à 9, ladite embase (3) adaptée à supporter ladite plaque (1) formant cuve, caractérisé en ce que ladite plaque (1) comprend deux poignées (5).

11. Appareil conforme à la revendication 10, caractérisé en ce que les poignées (5) sont disposées symétriquement sur deux côtés opposés (la) de la plaque de cuisson (1).

## Patentansprüche

1. Gargerät mit einer Garplatte (1), das einen mit einem Rand (la) der Garplatte (1) fest verbundenen Griff (5) und eine zum Unterstützen der Platte (1) eingerichtete Basis (3) umfasst, dadurch gekennzeichnet, dass der Griff (5) Einhakmittel (6) umfasst, die eingerichtet sind, um mit einem Abschnitt (7) der Basis (3) in einer eingehakten Position in Eingriff zu kommen und von der Basis (3) in einer Freigabeposition getrennt zu sein.

2. Gerät nach Anspruch 1, dadurch gekennzeichnet, dass der Griff Stützeinrichtungen (8) umfasst, die eingerichtet sind, um die Garplatte (1) auf der Basis (3) abzustützen.

3. Gerät nach einem der Ansprüche 1 oder 2, dadurch gekennzeichnet, dass der Griff (5) in Bezug auf die Garplatte (1) zwischen einer sogenannten hohen Position, in der die Garplatte (1) eingerichtet ist, in einem Abstand von der Basis (3) gehalten zu werden, und einer sogenannten niedrigen Position bewegbar ist, in der die Garplatte (1) eingerichtet ist, um nahe an der Basis (3) gehalten zu werden.

4. Gerät nach einem der Ansprüche 3, dadurch gekennzeichnet, dass der Griff (5) in Bezug auf die Garplatte (1) in Zwischenpositionen zwischen der sogenannten hohen und der sogenannten niedrigen Position bewegbar ist, in denen die Garplatte (1) in einem variablen Abstand von der Basis (3) gehalten ist.

5. Gerät nach einem der Ansprüche 3 oder 4, dadurch gekennzeichnet, dass der Griff (5) in Translation in der Ebene der Garplatte (1) zwischen der hohen Position und der niedrigen Position gleitet.

6. Gerät nach Anspruch 5, dadurch gekennzeichnet, dass in der hohen Position der Griff (5) der Garplatte (1) benachbart ist und in der niedrigen Position der Griff (5) sich in einem Abstand von der Garplatte (1) befindet.

7. Gerät nach einem der Ansprüche 3 bis 6, dadurch gekennzeichnet, dass die Einhakmittel (6) eingerichtet sind, um mit einem Abschnitt (7) der Basis (3) in Eingriff zu kommen, wenn der Griff (5) aus der niedrigen Position in die hohe Position bewegbar ist.

8. Gerät nach einem der Ansprüche 1 bis 7, dadurch gekennzeichnet, dass die Einhakmittel (6) Haken (6) umfassen, die eingerichtet sind, um mit einer Krempe (7) der Basis (3) in Eingriff zu kommen.

9. Gerät nach einem der Ansprüche 1 bis 8, dadurch gekennzeichnet, dass die Garplatte (1) ein Gitter ist.

10. Gerät nach einem der Ansprüche 1 bis 9, bei dem die Basis (3), die eingerichtet ist, um die Platte (1) zu unterstützen, eine Schale bildet, dadurch gekennzeichnet, dass die Platte (1) zwei Griffe (5) aufweist.

11. Gerät nach Anspruch 10, dadurch gekennzeichnet, dass die zwei Griffe (5) symmetrisch an zwei gegenüberliegenden Rändern (1a) der Garplatte (1) angeordnet sind.

## Claims

1. A cooking appliance comprising a cooking plate (1) provided with a handle (5) secured to an edge (la) of said cooking plate (1) and a base (3) adapted to support said plate (1), characterised in that the said handle (5) comprises engagement means (6) adapted to engage a portion (7) of the base (3) in an engaged position and to be released from the base (3) in a released position.

2. An appliance according to claim 1, characterised in that the said handle comprises support means (8) adapted to support said cooking plate (1) on the base (3).

3. An appliance according to claim 1 or 2, characterised in that the said handle (5) is movable relatively to the cooking plate (1) between a top position in which the cooking plate (1) is adapted to be kept at a distance from the base (3), and a bottom position in which the cooking plate (1) is adapted to be kept close to the base (3).

4. An appliance according to claim 3, characterised in that the said handle (5) is movable relatively to the cooking plate (1) in intermediate positions, between the top position and the bottom position, in which the cooking plate (1) is kept at a variable distance from the base (3).

5. An appliance according to claim 3 or 4,
characterised in that the handle slides in translation in the plane of said cooking plate (1) between the said top position and the said bottom position.

6. An appliance according to claim 5, characterised in that in the said top position the handle (5) is adjacent to the cooking plate (1) and in the said bottom position the handle (5) is at a distance from the cooking plate (1).

7. An appliance according to any one of claims 3 to 6, characterised in that the engagement means (6) are adapted to engage a portion (7) of the base (3) when the handle (5) is movable from the said bottom position to the said top position.

8. An appliance according to any one of claims 1 to 7, characterised in that the engagement means (6) comprise hooks (6) adapted to engage a rim (7) of the base (3).

9. An appliance according to any one of claims 1 to 8, characterised in that the cooking plate (1) is a grill.

10. An appliance according to any one of claims 1 to 9, the said base (3) adapted to support the said plate (1) forming a dish, characterised in that the said plate (1) comprises two handles (5).

11. An appliance according to claim 10, characterised in that the handles (5) are disposed symmetrically on two opposite sides (la) of the cooking plate (1).
